# EUROPÄISCHE PATENTANMELDUNG

(11) **EP 4 471 520 A1**
(43) Veröffentlichungstag der Anmeldung: **04.12.2024**
(21) Anmeldenummer: 23176376.4
(22) Anmeldetag: 31.05.2023
(51) Int. Cl.: G05B 19/418, G05B 23/02, G06F 3/041, G06F 3/01

(54) **LOKALISIERUNG EINES OPERATORS INNERHALB EINER TECHNISCHEN ANLAGE**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Vorgeschlagen wird ein Verfahren zur visuellen Darbietung einer Information bezüglich eines Ortes eines Operators zur Lokalisierung des Operators innerhalb einer technischen Anlage, insbesondere Fertigungs- oder Prozessanlage, umfassend:
a) Erfassen des Ortes des Operators,
b) Übertragen einer Information bezüglich des Ortes des Operators an ein Leitsystem (1) für eine technische Anlage,
c) Zuordnen des Ortes des Operators zu dem Operator durch das Leitsystem (1),
d) Erzeugen einer für den Operator spezifischen Visualisierung (22) durch das Leitsystem (1) zur Bedienung und Beobachtung der technischen Anlage,
e) Integrieren einer Information bezüglich des Ortes in die für den Operator spezifische Visualisierung (22),
f) Visuelle Darbietung der für den Operator spezifischen Visualisierung (22) an den Operator.

## Beschreibung

Die Erfindung betrifft ein Leitsystem für eine technische Anlage, insbesondere Fertigungs- oder Prozessanlage. Außerdem betrifft die Erfindung eine Verwendung eines Leitsystems zum Betrieb einer technischen Anlage.

Moderne Anforderungen nach mehr Flexibilität und Skalierbarkeit von verfahrenstechnischen Anlagen führen dazu, dass Anlagenteile als kleine Einheiten separat entwickelt werden - so genannte "Package Units" oder "technische Module". Ganze verfahrenstechnische Anlagen entstehen dann durch die Kombination einzelner Package Units. Um die Abläufe zwischen den einzelnen Package Units aussteuern - orchestrieren - zu können, kommt beispielsweise ein Batch System auf Operator Station Servern zum Einsatz.

Neben der Modularität bei der Entwicklung von Package Units bieten diese auch im Hinblick auf die Dynamik einer verfahrenstechnischen Anlage Vorteile - wenn beispielsweise nach der Produktion einer Charge die Anlage für die Produktion einer anderen Charge neu organisiert wird (Reallokation).

Eine Package Unit ist ein modularer Anlagenteil, der in einem zentralen Engineering als eine abgeschlossene Einheit integriert werden kann. Package Units sind umfangreicher als Messstellen oder technische Einrichtungen. Manchmal ist eine Package Unit gar eine ganze Teilanlage mit einer kompletten verfahrenstechnischen Struktur, die mehrere technische Einrichtungen (z.B. Tanks) umfasst, die wiederum mehrere Messstellen (z.B. Ventile, Monitore, Regler, Motoren...) beinhalten.

In modernen Anlagen und insbesondere in modernen modularen Anlagen werden die einzelnen Anlagenteile und insbesondere Module / Package Units häufig (beispielsweise innerhalb einer Anlage) bewegt. Die Lokalisierung der Package Units erweist sich unter diesen Randbedingungen als sehr aufwendig.

Für die Bedienung und Beobachtung verfahrenstechnischer Anlagen werden symbolische Anlagenbilder erstellt, die die verfahrenstechnischen Zusammenhänge - insbesondere zwischen den Prozessobjekten - abstrahiert darstellen. Anlagenbilder setzen sich aus statischen Symbolen (z.B. Leitungen, Rechtecke, usw.), dynamisierten Symbolen (z.B. in Abhängigkeit von Prozesswerten Leitungen mit Farbumschlag, Rechtecke mit Füllständen, usw.), Block Symbolen (zur dynamisierten Visualisierung verfahrenstechnischer Prozessobjekte), komplexe Controls (z.B. Trendanzeigen, Meldefolgeanzeigen, usw.) und Container, um Inhalte aus unabhängigen und eigenständige Quellen visualisieren zu können (z.B. Webcams, Anlagenbilder modularer Anlagenteile (Package Units), Apps (z.B. Regleroptimierer, KPI Berechnungen), usw.) zusammen. Das Alarmmanagement unterstützt die Operatoren effizient, die wichtigsten verfahrenstechnischen Alarme zu erkennen, um darauf reagieren zu können. In einigen Fällen lassen sich verfahrenstechnische Alarme jedoch nicht "vom Bildschirm aus" in der Warte, sondern ausschließlich vor Ort beheben.

In der DE 10 2015 202 792 A1 ist ein Verfahren zum Lokalisieren einer mobilen Einrichtung in einer Produktionsanlage offenbart.

Die WO 2013/083144 A1 offenbart ein Verfahren zum Betreiben einer Produktionsanlage mit einer Mehrzahl von Arbeitsstationen sowie einer Transporteinrichtung zum Transportieren von Gütern zwischen den Arbeitsstationen, welche eine Mehrzahl fahrerloser Flurförderzeuge umfasst, die sich auf jeweils vorgegebenen Pfaden zwischen zugeordneten Arbeitsstationen bewegen.

Der Erfindung liegt daher die Aufgabe zugrunde, ein Leitsystem für eine technische Anlage anzugeben, welches ein effizienteres und koordiniertes Bedienen und Beobachten technischer Anlagen ermöglicht.

Diese Aufgabe wird gelöst durch ein Leitsystem für eine technische Anlage, insbesondere Fertigungs- oder Prozessanlage, das dazu ausgebildet ist, eine Visualisierung für Operatoren der technischen Anlage zur Bedienung und Beobachtung der technischen Anlage zu erzeugen, mit den Merkmalen des Anspruchs 1. Zudem wird die Aufgabe gelöst durch ein Verfahren zur visuellen Darbietung einer Information bezüglich eines Ortes eines Operators mit den Merkmalen des Anspruchs 9. Außerdem wird die Aufgabe gelöst durch eine Verwendung eines Leitsystems zum Betrieb einer technischen Anlage gemäß Anspruch 15. Vorteilhafte Weiterbildungen ergeben sich aus den abhängigen Ansprüchen.

Das erfindungsgemäße Leitsystem ist dadurch gekennzeichnet, dass es dazu ausgebildet ist, einem Operator einen Ort zur Lokalisierung des Operators innerhalb der technischen Anlage zuzuordnen und eine Information bezüglich des Ortes in eine für den Operator und/oder weitere Operatoren spezifische Visualisierung zur Bedienung und Beobachtung der technischen Anlage zu integrieren.

Das Leitsystem erfragt eine Information über einen (momentanen) Aufenthaltsort eines Operators innerhalb einer technischen Anlage, ordnet diesem im Leitsystem dem Operator zu und verwendet diese Information dann in der Visualisierung zur Bedienung und Beobachtung der technischen Anlage. Der damit verbundene Nutzen besteht in der Verbindung der Ortsinformation mit der Automatisierung der technischen Anlage, genauer: mit der Bedienung und Beobachtung der technischen Anlage. Die Ortsinformation kann durch den Operator bzw. weitere Operatoren auf vielfältige Art und Weise auf nützliche Art und Weise verwendet werden. Hierzu sei auch auf die Beschreibung der vorteilhaften Weiterbildungen der Erfindung verwiesen.

Zusätzlich zu der Ortsinformation können weitere Informationen betreffend den (ersten) Operator zusammen mit Ortsinformation visualisiert werden. Dabei kann es sich beispielsweise um eine Rolle des Operators handeln, die spezielle Befugnisse des Operators ausdrücken kann. Beispielsweise kann hierbei visualisiert werden, dass der Operator Y eine Komponente Z der technischen Anlage bedienen darf. Auch kann eine spezielle Befähigung des Operators mit angezeigt werden. Beispielsweise kann durch eine grüne Farbgebung in der Visualisierung symbolisiert werden, dass der Operator Y die Komponente W auch bedienen kann, d.h. ob er dazu befähigt ist. Hierfür greift das Leitsysteme auf entsprechende Datenbanken zu, die Rollen, Befähigungen etc. der Operatoren der technischen Anlage umfassen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der technischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

Bevorzugt ist das Leitsystem dazu ausgebildet, die Information bezüglich des Ortes des Operators derart in die Visualisierung zu integrieren, dass Komponenten der technischen Anlage, die in der technischen Anlage in einem bestimmten Bereich um den Ort herum angeordnet sind, mit einer bestimmten Kennzeichnung in der Visualisierung dargestellt sind. Bei den Komponenten kann es sich um einzelne Sensoren oder Aktoren, aber auch um umfassendere Geräte wie Motoren, Pumpen, Ventile, Tanks, Heizer, robotergestützte Greifarme, Förderbänder und dergleichen handeln. Die Komponenten werden dabei in an sich bekannter Weise durch eine entsprechende Symbolisierung oder Texturierung in der Visualisierung repräsentiert. Der Operator erhält im Rahmen dieser vorteilhaften Weiterbildung unmittelbar eine Information darüber, welche Komponenten in seinem Umfeld befindlich sind. Der oder die weiteren Operatoren erfahren dadurch, dass der (erste) Operator sich in der Nähe dieser bestimmten Komponenten befindet - ohne, dass sie hierfür eine direkte Informierung durch den Operator bedürften. Beispielsweise lässt sich dadurch eine Behandlung einer Alarmursache oder eine Wartung von Komponenten der technischen Anlage vereinfachen, da der (erste) Operator, der sich ja "sowieso" in der Nähe der Komponenten befindet, schnell um mögliche Alarmquellen in den Komponenten oder um eine Wartung der Komponenten kümmern kann. Der (erste) Operator kann dabei von den weiteren Operatoren gezielt getriggert werden, ohne dass eine direkte Kommunikation zwischen den Operatoren bestehen müsste.

Das Leitsystem kann dazu ausgebildet sein, die Information bezüglich des Ortes des Operators in eine hierarchische Darstellung von Komponenten der technischen Anlage in der Visualisierung zu integrieren, wobei die hierarchische Darstellung insbesondere ein verfahrenstechnisches Zusammenwirken der Komponenten abbildet. Bei solch einer verfahrenstechnisch strukturierten Darstellung der Komponenten spricht man im Leitsystem "Siemens SIMATIC PCS 7" auch von einer technologischen Hierarchie. Durch diese Weiterbildung ist unmittelbar ein Zusammenhang zwischen dem Ort des Operators und den darum befindlichen Komponenten mitsamt deren Zusammenwirken für den Operator bzw. die weiteren Operatoren ersichtlich.

Ganz besonders bevorzugt ist das Leitsystem dazu ausgebildet, die Information bezüglich des Ortes des Operators derart in ein in der Visualisierung enthaltenes Anlagenbild der technischen Anlage zu integrieren, dass die Information bezüglich des Ortes des Operators in dem Anlagenbild einem symbolischen Bild einer Komponente der technischen Anlage, die in der technischen Anlage in einem bestimmten Bereich um den Ort des Operators herum angeordnet ist, zugeordnet ist.

Von dem Operator kann veränderbar vorgebbar sein, ob die Information bezüglich des Ortes des Operators für weitere Operatoren zugänglich ist, insbesondere ob die Information bezüglich des Ortes des Operators in einer für die weiteren Operatoren spezifischen Visualisierung integriert ist. Mit anderen Worten kann der Operator vorgeben, ob die ihn betreffende Ortsinformation ihm selbst bzw. den anderen Operatoren zugänglich ist. Es kann beispielsweise sinnvoll sein, die Ortsbestimmung nur dann durchzuführen, wenn der Operator einen bestimmten Bereich der technischen Anlage betritt. Während er sich beispielsweise in einer Leitwarte befindet, kann der Operator die Ortsdarstellung in der Visualisierung deaktivieren. Je nachdem, welches Verfahren zur Ortsbestimmung eingesetzt wird, kann es vorteilhafterweise auch vorgesehen sein, dass der Operator die Ortsbestimmung vollständig deaktivieren (d.h. es wird kein Ort des Operators bestimmt).

Für den Fall, dass die Information bezüglich des Ortes des Operators zusätzlich in einer für weitere Operatoren spezifischen Visualisierung integriert ist, kann das Leitsystem dazu ausgebildet sein, Eingaben, insbesondere Texteingaben, durch die weiteren Operatoren entgegenzunehmen und die Eingaben gemeinsam mit der Information bezüglich des Ortes des Operators in der für den Operator spezifischen Visualisierung zu integrieren. Mit anderen Worten können die weiteren Operatoren über das Mittel der Ortsinformation in der Visualisierung dem Operator zielgerichtet Nachrichten übermitteln. Inhalt einer solchen Nachricht kann beispielsweise sein, dass sich der (erste) Operator um die Komponente X kümmern soll, die aktuell einen Wartungsbedarf meldet, welcher von dem (ersten) Operator adressiert werden soll.

Die Eingabe der weiteren Operatoren wird vorzugsweise nicht nur dem ersten Operator gemeinsam mit der Information bezüglich des Ortes des Operators visualisiert, sondern auch den weiteren Operatoren in deren jeweiligen Visualisierungen. Dadurch können sie einfach erfassen, welcher weitere Operator welchem Operator welche Eingabe übermittelt hat. Hierzu weist die Eingabe sinnvollerweise eine Information über ihren Sender auf.

Im Rahmen einer bevorzugten Weiterbildung der Erfindung ist das Leitsystem dazu ausgebildet, die Information bezüglich des Ortes des Operators in einem in der Visualisierung enthaltenen strukturellen Plan der technischen Anlage, insbesondere in einem Rohrleitungs- und Instrumentenfließschema der als Prozessanlage ausgebildeten technischen Anlage, zu integrieren. Hierdurch ist der Bezug zwischen der Ortsinformation und dem verfahrenstechnischen Aufbau der (als Prozessanlage ausgebildeten) technischen Anlage noch klarer ersichtlich.

Die Information bezüglich des Ortes des Operators innerhalb der technischen Anlage kann durch das Leitsystem von einem auf GPS, einem Mobilfunkübertragungsverfahren oder WLAN basierenden System abgefragt worden sein.

Die zuvor formulierte Aufgabe wird zudem gelöst durch ein Verfahren zur visuellen Darbietung einer Information bezüglich eines Ortes eines Operators zur Lokalisierung des Operators innerhalb einer technischen Anlage, insbesondere Fertigungs- oder Prozessanlage, umfassend:
a) Erfassen des Ortes des Operators,
b) Übertragen einer Information bezüglich des Ortes des Operators an ein Leitsystem für eine technische Anlage,
c) Zuordnen des Ortes des Operators zu dem Operator durch das Leitsystem,
d) Erzeugen einer für den Operator spezifischen Visualisierung durch das Leitsystem zur Bedienung und Beobachtung der technischen Anlage,
e) Integrieren einer Information bezüglich des Ortes in die für den Operator spezifische Visualisierung,
f) Visuelle Darbietung der für den Operator spezifischen Visualisierung an den Operator.

Der Ort des Operators kann neben den bereits aufgeführten Verfahren (GPS, Mobilfunk, WLAN) auf besonders vorteilhafte Art und Weise durch die folgenden Verfahrensschritte erfasst werden:
a) Erfassen eines Identifikationsmerkmals einer ersten Komponente der technischen Anlage durch den Operator und Übertragen des Identifikationsmerkmals an einen Operator Station Server des Leitsystems der technischen Anlage,
b) Für den Fall, dass für die erste Komponente im Rahmen einer Projektierung einer Automatisierung der technischen Anlage eine Lokalisierungsinformation zugewiesen worden ist, Ermitteln der Position des Operators anhand der Lokalisierungsinformation durch den Operator Station Server.

Unter einem "Operator Station Server" wird vorliegend ein Server verstanden, der zentral Daten eines Bedien- und Beobachtungssystems sowie in der Regel Alarm- und Messwertarchive eines Prozessleitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Im Rahmen des erfindungsgemäßen Verfahrens wird zunächst ein Identifikationsmerkmal einer (ersten) Komponente durch den Operator erfasst. Die Komponente kann dabei ein beliebiges Gerät, eine Rohrleitung, ein Gebäudeteil oder dergleichen sein, welcher über ein Identifikationsmerkmal verfügt, welches der Operator zur Identifikation der ersten Komponente an den Operator Station Server weiterleiten kann. Das Erfassen des Identifikationsmerkmals kann dabei durch eine manuelle Eingabe durch den Operator oder durch eine bildliche Erfassung, insbesondere eines Anlagenkennzeichens, vorgenommen werden, vorzugsweise unter Nutzung eines Smartphones, Tablets, Notebooks oder einer Datenbrille zur Darstellung einer erweiterten Realität. Derartige Identifikationsmerkmale, insbesondere Anlagenkennzeichen, sind in technischen Anlagen etabliert und für den Operator in der Regel einfach auffindbar.

Mit anderen Worten begibt sich der Operator zu der Komponente und erfasst das Identifikationsmerkmal (durch manuelle Eingabe, Abfotografieren etc.). Das Identifikationsmerkmal wird danach an den Operator Station Server übertragen, welcher innerhalb der technischen Anlage befindlich sein kann, aber nicht muss. Die Datenübertragung kann auf eine beliebige Art und Weise erfolgen. Bevorzugt erfolgt das Übertragen des Identifikationsmerkmals an den Operator Station Server des Leitsystems kabellos, um dem Operator eine hohe Flexibilität beim Navigieren zu ermöglichen.

Wenn der Komponente im Rahmen einer Projektierung einer Automatisierung der technischen Anlage eine Lokalisierungsinformation der Komponente zugewiesen worden ist, wird diese Lokalisierungsinformation auf besonders vorteilhafte Art und Weise von dem Operator Station Server dazu verwendet, die zu einem aktuellen Zeitpunkt erste Position des Operators zu ermitteln. Anhand des Identifikationsmerkmals und der in der Projektierung, welche dem Operator Station Server zugänglich ist, enthaltenen, zu der Komponente gehörigen Lokalisierungsinformation ermittelt der Operator Station Server automatisiert die aktuelle Position bzw. den Ort des Operators.

Um die Position zu aktualisieren, kann der Operator ein Identifikationsmerkmal wenigstens einer zweiten Komponente erfassen und die zuvor erläuterten Verfahrensschritte a und b können für die wenigstens zweite Komponente durchgeführt werden. Die zuvor formulierte Aufgabe kann zudem gelöst werden durch die Verwendung eines Leitsystems zum Betrieb einer technischen Anlage, insbesondere Fertigungs- oder Prozessanlage.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: ein erfindungsgemäßes Leitsystem in einer schematischen Darstellung;
- FIG 2: exemplarische Strukturierungen von Visualisierungen von Komponenten einer technischen Anlage; und
- FIG 3: eine Visualisierung für eine Bedienung und Beobachtung der technischen Anlage.

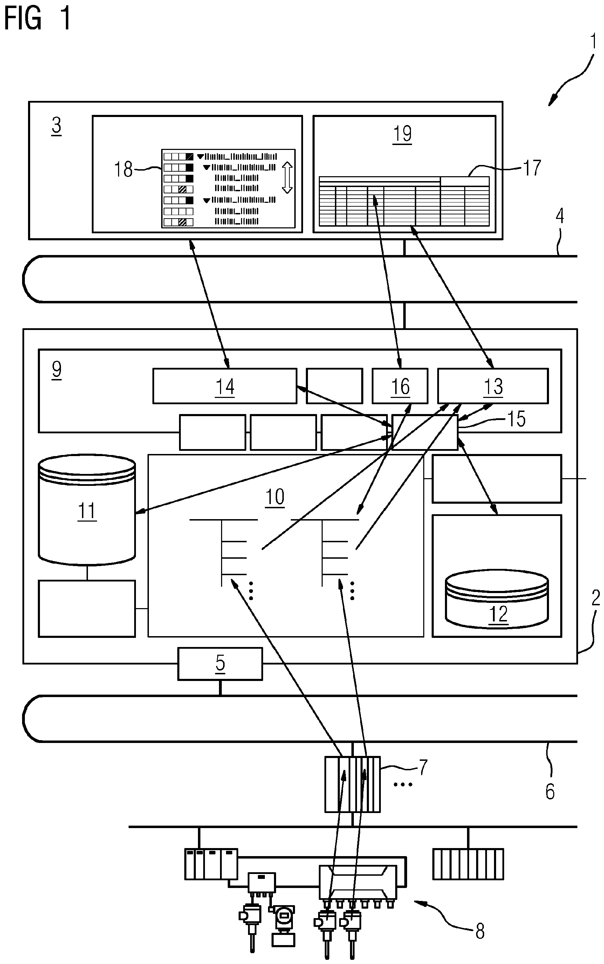

In FIG 1 ist ein Leitsystem 1 für die Bedienung und Beobachtung einer als Prozessanlage ausgebildeten technischen Anlage schematisch dargestellt. Das Leitsystem 1 umfasst einen Operator Station Server 2 und einen Operator Station Client 3. Der Operator Station Server 2 und der Operator Station Client 3 sind über einen Terminalbus 4 miteinander und optional mit nicht dargestellten weiteren Komponenten des Leitsystems 1 wie einem Archivserver verbunden.

Ein Benutzer bzw. Operator kann zum Zwecke des Bedienens und Beobachtens über den Operator Station Client 3 mittels des Terminalbus 4 auf den Operator Station Server 2 zugreifen. Der Terminalbus 4 kann, ohne sich darauf zu beschränken, beispielsweise als Industrial Ethernet ausgebildet sein.

Der Operator Station Server 2 weist eine Geräteschnittstelle 5 auf, die mit einem Anlagenbus 6 verbunden ist. Über diese Geräteschnittstelle 5 ist der Operator Station Server 2 mit einem Automatisierungsgerät 7 sowie mit weiteren Komponenten der verfahrenstechnischen Anlage wie Peripheriegeräten 8 verbunden und kann mit diesen kommunizieren. Der Anlagenbus 8 kann, ohne sich darauf zu beschränken, beispielsweise als Industrial Ethernet ausgebildet sein.

Auf dem Operator Station Server 2 sind weiterhin ein Visualisierungsdienst 9, ein Prozessabbild 10, ein Konfigurationsspeicher 11 und ein Nutzerspeicher 12 implementiert. Zu dem Visualisierungsdienst 9 gehören ein Anlagenbilddienst 13 und ein Hierarchiedienst 14, welche Teildienste des Visualisierungsdienstes darstellen. Ein weiterer, auf dem Operator Station Server 2 implementierter Dienst stellt der Benutzerdienst 15 dar, dessen Funktionalität im weiteren Verlauf erläutert wird.

Der in dem Operator Station Server 2 integrierte Visualisierungsdienst 9 initiiert eine Übertragung von Visualisierungsinformationen an den Operator Station Client 3. Der Operator Station Client 3 ist dazu ausgebildet, eine Visualisierung, d.h. eine grafische Darbietung, insbesondere von Anlagenbildern und Hierarchien, zum Bedienen und Beobachten der Prozessanlage darzustellen.

In dem Prozessabbild 10 ist jeweils eine Momentaufnahme der (Signal-)Zustände der verbundenen Geräte 8 und/oder Applikationen hinterlegt. Vorschriften zum strukturellen Aufbau des Prozessabbildes 10 sowie der Visualisierung für den Operator Station Client 5 entnimmt der Operator Station Server 2 dem Konfigurationsspeicher 11.

Ein ebenfalls auf dem Operator Station Server 2 implementierter Alarmdienst 16 greift auf das Prozessabbild 10 zu und entnimmt diesem etwaige Alarmmeldungen. Diese werden wieder an den Operator Station Client 3 übertragen, um dem Operator die Alarmmeldungen visuell (und ggf. akustisch) in Form einer Alarmmeldeanzeige 17 darzubieten.

Im Folgenden wird eine Ausprägung eines erfindungsgemäßen Verfahrens beschrieben:
In einer Projektierungsphase kann ein Projekteur durch Nutzung einer speziellen Entwurfsoberfläche auf einem Engineering Station Client einem dazugehörigen Entwurfsdienst auf einem Engineering Station Server unter anderem Alarme einzelnen Komponenten der technischen Anlage zuweisen. Dabei kann der Projekteur bei dem vorliegend beschriebenen Leitsystem 1 jedem Alarm eine Positionsinformation beigefügen, welche eine (initiale) Position der zu dem Alarm gehörigen Komponente angibt. Die erstellte Projektierung kann über eine an sich bekannte Ladefunktionalität in den Konfigurationsspeicher 11 des Operator Station Servers 2 übertragen werden.

Ein Operator des Leitsystems 1, welcher seinen Ort innerhalb der technischen Anlage erfassen möchte, kann ein Identifikationsmerkmal der zuvor genannten Komponente erfassen. Dieses Identifikationsmerkmal wird dann an den Operator Station Server 2 des Leitsystems 1 der technischen Anlage übertragen und in dem Nutzerspeicher 12 hinterlegt.

Es kann aber auch ein Ort des Operators über ein auf GPS, einem Mobilfunkübertragungsverfahren oder WLAN basierendes System ermittelt und in dem Nutzerspeicher 12 des Operator Station Servers 2 übertragen werden. Durch die Hinterlegung des Ortes des Operators in dem Nutzerspeicher 12 ist der Ort in dem Operator Station Server 2 eindeutig dem Operator zugeordnet. Der Operator kann durch eine entsprechende Nutzereingabe festlegen, ob der Ort nur für ihn in der Visualisierung sichtbar ist (Einstellung "Private"), oder ob der Ort auch anderen Operatoren in deren Visualisierung sichtbar gemacht werden soll (Einstellung "Public").

Der Benutzerdienst 15 koordiniert den Einbezug des Ortes des Operators, indem er die Information über den Ort dem Nutzerspeicher 12 entnimmt und - in Abhängigkeit von vorgegebenen Bestimmungen, die im Konfigurationsspeicher 11 oder dem Nutzerspeicher 12 hinterlegt sind - an den Anlagenbilddienst 13 und den Hierarchiedienst 14 übergibt. Bei den vorgegebenen Bestimmungen kann es sich um die Sichtbarkeitsvorgabe des Operators bezüglich seines Ortes oder um Vorgaben zur Hervorhebung "benachbarter" Komponenten um den Ort des Operators herum handeln.

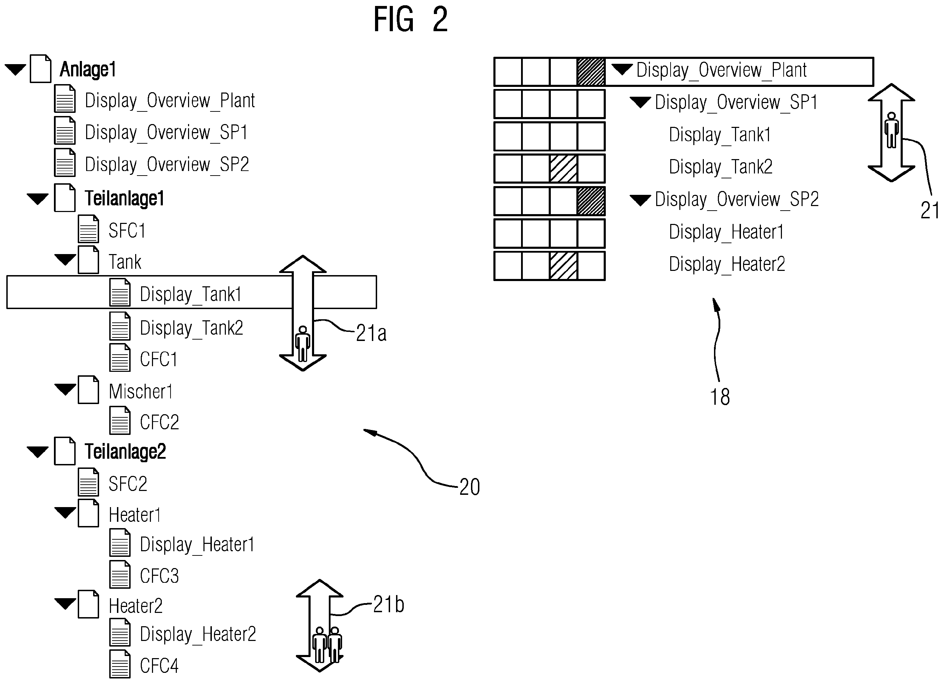

Der Hierarchiedienst 14 nimmt diese Informationen vom Nutzerdienst 16 entgegen und erzeugt eine hierarchische Strukturierung 18 der Komponenten der technischen Anlage, die in FIG 2 näher erläutert wird. Analog dazu erzeugt der Anlagenbilddienst 13, ggf. in Verbindung mit dem Alarmdienst 16, ein Anlagenbild 19, welches gemeinsam mit der hierarchischen Strukturierung an den Operator Station Client 3 übermittelt wird. Dieser stellt dann die hierarchische Strukturierung 18 und das Anlagenbild 19, welches hier eine Alarmmeldefolgeanzeige 17 umfasst, in einer Visualisierung für den Operator dar. Dabei kann für jeden Operator einer Vielzahl von Operatoren eine individuelle Visualisierung erzeugt und dargestellt werden.

In FIG 2 sind die hierarchische Strukturierung 18 aus FIG 1 und eine weitere hierarchische Strukturierung 20 dargestellt. Bei der (ersten) hierarchischen Strukturierung 18 ist ein Anlagenbild "Display_Overview_Plant" mit hierarchisch untergeordneten Anlagenbildern "Display_Overview_SP1", "Display_Tank1", "Display_Tank2", "Display_Overview_SP2", "Display_Heater1" und "Display_Heater2" zu erkennen. Während sich das Anlagenbild "Display_Overview_Plant" auf der obersten Hierarchiestufe befindet, sind die Anlagenbilder "Display_Overview_SP1" und "Display_Overview_SP2" eine Stufe tiefer hierarchisch angeordnet. Die Anlagenbilder "Display_Tank1" und "Display_Tank2" sowie "Display_Heater1" und "Display_Heater2" befinden sich auf der untersten Hierarchiestufe. Die Hierarchie bildet hier Teilmengen der jeweils hierarchisch darüber liegenden Anlagenbilder ab.

Rechts neben der hierarchischen Strukturierung 18 ist eine Kennzeichnung 21 in Form eines vertikal angeordneten Doppelpfeils mit einer symbolisierten Person dargestellt. Dies soll verdeutlichen, dass der Ort, an dem sich der Operator (die symbolisierte Person) befindet, in der Nähe von Komponenten der technischen Anlage liegt, die in den links von der Kennzeichnung 21 angeordneten Anlagenbildern "Display_Overview_SP1" bzw. "Display_Tank1" und "Display_Tank2" durch entsprechende Symbole repräsentiert sind.

Auf der linken Seite in FIG 2 stellt die weitere hierarchische Strukturierung 20 einzelne Komponenten der technischen Anlage dar, welche gemäß einem verfahrenstechnischen Zusammenhang strukturiert sind. Dies bedeutet zum Beispiel, dass die Anlage1 in zwei Teilanlagen unterteilt ist, welche wiederum Tanks, Mischer, Heizer und dergleichen umfassen. Diesen sind wiederum verschiedene Subkomponenten zugeordnet.

Die Kennzeichnungen 21a, 21b verdeutlichen hier, dass sich der Ort des Operators in einem Bereich der in FIG 2 links davon liegenden Komponenten befindet. Die untere Kennzeichnung 21b, weist zwei symbolisierte Personen auf, was darauf hinweist, dass sich zwei Operatoren in der Nähe der links davon genannten Komponenten befinden.

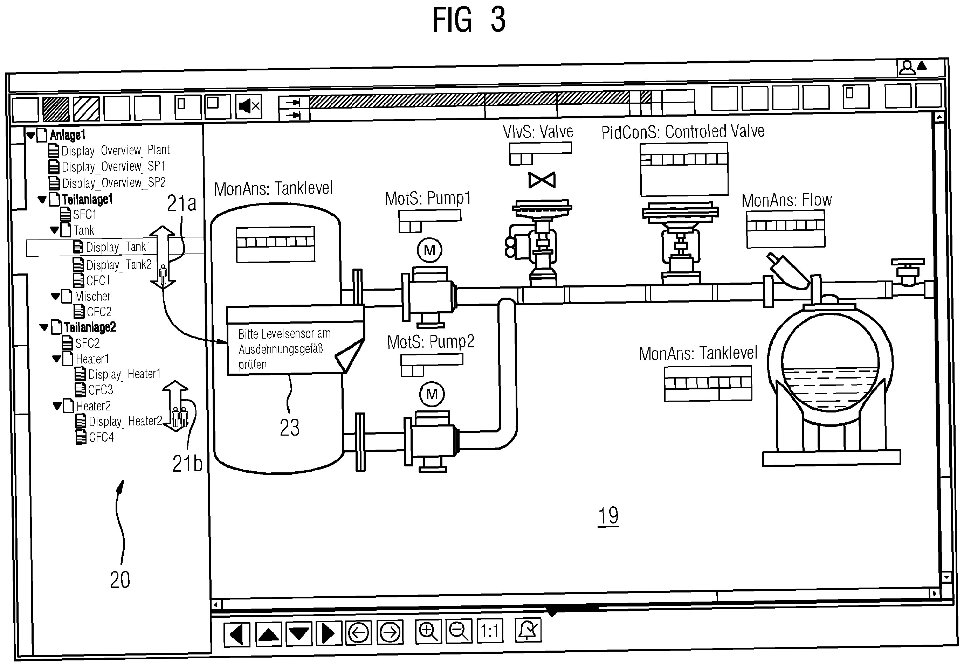

In FIG 3 ist eine Visualisierung 22 dargestellt, welche durch den Operator Station Client aus FIG 1 für den Operator und ggf. weitere Operatoren erzeugt wurde. Auf der linken Seite ist die weitere hierarchische Strukturierung 20 mit den beiden Kennzeichnungen 21a, 21b zu erkennen. Auf der rechten Seite ist ein Anlagenbild 19 dargestellt. Die obere Kennzeichnung 21a ist durch ein Pfeilsymbol, welches auf ein Textfeld 23 hinweist. In dem Textfeld 23 ist eine Eingabe eines Operators enthalten, welcher den Operator, der sich in der Nähe der Komponenten des "Tanks" befindet, darauf hinweisen soll, dass der Operator "bitte den Levelsensor am Ausdehnungsgefäß prüfen soll". Das Textfeld 23 wird dabei in der Nähe des Symbols des betroffenen Tanks in dem Anlagenbild 19 dargestellt, so dass der Operator unmittelbar den Zusammenhang zwischen der Eingabe und der betroffenen Komponente erfassen kann.

Ein Operator kann somit nicht nur erkennen, wer sich gerade wo in der verfahrenstechnischen Anlage aufhält und mit welchen verfahrenstechnischen Objekten und Dokumenten sein Aufenthaltsort assoziiert werden kann, sondern ihm ist es auch möglich, Unterstützungsanfragen über die Eingabe 23 an den Operator vor Ort zu stellen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (1) für eine technische Anlage, insbesondere Fertigungs- oder Prozessanlage, das dazu ausgebildet ist, eine Visualisierung (22) für Operatoren der technischen Anlage zur Bedienung und Beobachtung der technischen Anlage zu erzeugen,
**dadurch gekennzeichnet, dass**
das Leitsystem (1) dazu ausgebildet ist, einem Operator einen Ort zur Lokalisierung des Operators innerhalb der technischen Anlage zuzuordnen und eine Information bezüglich des Ortes in eine für den Operator und/oder für weitere Operatoren spezifische Visualisierung (22) zur Bedienung und Beobachtung der technischen Anlage zu integrieren.

2. Leitsystem (1) nach Anspruch 1, das dazu ausgebildet ist, die Information bezüglich des Ortes des Operators derart in die Visualisierung (22) zu integrieren, dass Komponenten der technischen Anlage, die in der technischen Anlage in einem bestimmten Bereich um den Ort herum angeordnet sind, mit einer bestimmten Kennzeichnung (21, 21a, 21b) in der Visualisierung (22) dargestellt sind.

3. Leitsystem (1) nach Anspruch 1 oder 2, das dazu ausgebildet ist, die Information bezüglich des Ortes des Operators in eine hierarchische Darstellung (18, 20) von Komponenten der technischen Anlage in der Visualisierung (22) zu integrieren, wobei die hierarchische Darstellung (18, 20) insbesondere ein verfahrenstechnisches Zusammenwirken der Komponenten abbildet.

4. Leitsystem (1) nach einem der vorangegangenen Ansprüche, das dazu ausgebildet ist, die Information bezüglich des Ortes des Operators derart in ein in der Visualisierung (22) enthaltenes Anlagenbild (19) der technischen Anlage zu integrieren, dass die Information bezüglich des Ortes des Operators in dem Anlagenbild (19) einem symbolischen Bild einer Komponente der technischen Anlage, die in der technischen Anlage in einem bestimmten Bereich um den Ort des Operators herum angeordnet ist, zugeordnet ist.

5. Leitsystem (1) nach einem der vorangegangenen Ansprüche, bei dem von dem Operator veränderbar vorgebbar ist, ob die Information bezüglich des Ortes des Operators für weitere Operatoren zugänglich ist, insbesondere ob die Information bezüglich des Ortes des Operators in einer für die weiteren Operatoren spezifischen Visualisierung (22) integriert ist.

6. Leitsystem (1) nach einem der vorangegangenen Ansprüche, das dazu ausgebildet ist, für den Fall, dass die Information bezüglich des Ortes des Operators zusätzlich in einer für weitere Operatoren spezifischen Visualisierung (22) integriert ist, Eingaben (23), insbesondere Texteingaben, durch die weiteren Operatoren entgegenzunehmen und die Eingaben (23) gemeinsam mit der Information bezüglich des Ortes des Operators in der für den Operator spezifischen Visualisierung (22) zu integrieren.

7. Leitsystem (1) nach Anspruch 6, das dazu ausgebildet ist, die Eingaben (23) gemeinsam mit der Information bezüglich des Ortes des Operators in der für die weiteren Operatoren jeweils spezifischen Visualisierung (22) zu integrieren.

8. Leitsystem (1) nach einem der vorangegangenen Ansprüche, das dazu ausgebildet ist, die Information bezüglich des Ortes des Operators in einem in der Visualisierung (22) enthaltenen strukturellen Plan der technischen Anlage, insbesondere in einem Rohrleitungs- und Instrumentenfließschema der als Prozessanlage ausgebildeten technischen Anlage, zu integrieren.

9. Leitsystem (1) nach einem der vorangegangenen Ansprüche, das dazu ausgebildet ist, die Information bezüglich des Ortes des Operators innerhalb der technischen Anlage von einem auf GPS, einem Mobilfunkübertragungsverfahren oder WLAN basierenden System abzufragen.

10. Verfahren zur visuellen Darbietung einer Information bezüglich eines Ortes eines Operators zur Lokalisierung des Operators innerhalb einer technischen Anlage, insbesondere Fertigungs- oder Prozessanlage, umfassend:
a) Erfassen des Ortes des Operators,
b) Übertragen einer Information bezüglich des Ortes des Operators an ein Leitsystem (1) für eine technische Anlage,
c) Zuordnen des Ortes des Operators zu dem Operator durch das Leitsystem (1),
d) Erzeugen einer für den Operator spezifischen Visualisierung (22) durch das Leitsystem (1) zur Bedienung und Beobachtung der technischen Anlage,
e) Integrieren einer Information bezüglich des Ortes in die für den Operator spezifische Visualisierung (22),
f) Visuelle Darbietung der für den Operator spezifischen Visualisierung (22) an den Operator.

11. Verfahren nach Anspruch 10, bei dem der Ort durch ein auf GPS, einem Mobilfunkübertragungsverfahren oder auf WLAN basierendes System erfasst und an die entsprechende Information an das Leitsystem übertragen wird.

12. Verfahren, nach Anspruch 10, bei dem der Ort des Operators durch die folgenden Verfahrensschritte erfasst wird:
a) Erfassen eines Identifikationsmerkmals einer Komponente der technischen Anlage durch den Operator und Übertragen des Identifikationsmerkmals an einen Operator Station Server (2) des Leitsystems (1) der technischen Anlage,
b) Für den Fall, dass für die Komponente im Rahmen einer Projektierung einer Automatisierung der technischen Anlage eine Lokalisierungsinformation zugewiesen worden ist, Ermitteln der Position des Operators anhand der Lokalisierungsinformation durch den Operator Station Server (2).

13. Verfahren nach Anspruch 12, bei dem der Operator ein Identifikationsmerkmal wenigstens einer zweiten Komponente erfasst und die Schritte a und b gemäß Anspruch 12 für die wenigstens zweite Komponente durchgeführt werden, um einen Ort des Operators innerhalb der technischen Anlage zu aktualisieren.

14. Verfahren nach Anspruch 12 oder 13, bei dem das Erfassen des Identifikationsmerkmals durch eine manuelle Eingabe durch den Operator oder durch eine bildliche Erfassung, insbesondere eines Anlagenkennzeichens, vorgenommen wird, vorzugsweise unter Nutzung eines Smartphones, Tablets, Notebooks oder einer Datenbrille zur Darstellung einer erweiterten Realität.

15. Verwendung eines Leitsystems (1) gemäß einem der Ansprüche 1 bis 9 zum Betrieb einer technischen Anlage, insbesondere Fertigungs- oder Prozessanlage.
